# EUROPÄISCHE PATENTANMELDUNG

(11) **EP 1 202 537 A2**
(43) Veröffentlichungstag der Anmeldung: **02.05.2002**
(21) Anmeldenummer: 01123073.7
(22) Anmeldetag: 26.09.2001
(51) Int. Cl.: H04M 1/60

(54) **Freisprecheinrichtung**

(30) Priorität: 31.10.2000 DE 10054118
(71) Anmelder: paragon AG, 33129 Delbrück (DE)
(72) Erfinder: Rodemer, Klaus, 36369 Lautertal 5 (DE); Ohlenburger, Jörg, 35619 Braunfelds (DE)
(74) Vertreter: Schütz, Peter, Dipl.-Ing.

(57) **Zusammenfassung**

Bei einer insbesondere für Kraftfahrzeuge geeigneten Freisprecheinrichtung ist der Lautsprecher (20) in einem lose auf dem Gurt sitzenden Gehäuse (16) angeordnet, das mit einer Halterung an der B-Säule in Ohrnähe fixiert ist. Das Mikrofon (30) befindet sich in einem auf dem Gurt (10) verschiebbaren und fixierbaren Mikrofongehäuse (18) und steht über eine Infrarotstrecke mit einer im Lautsprechergehäuse vorgesehenen Schaltung in Verbindung. Ein die Mikrofonschaltung speisender Akku wird über Ladekontakte (34,36) zwischen Mikrofon- und Lautsprechergehäuse aufgeladen, wenn das Mikrofongehäuse (18) an das Lautsprechergehäuse (16) herangeschoben wird. Die Stromversorgung kann über ein Kabel aus der Autosteckdose erfolgen, und die Signalübertragung zwischen Freisprecheinrichtung und Mobiltelefon erfolgt über eine Steckerverbindung mit der Head-Set-Buchse des Telefons.

## Beschreibung

Die Erfindung betrifft eine Freisprecheinrichtung mit den im Oberbegriff des Anspruchs 1 angegebenen Merkmalen.

Aus der DE 38 08 055 A1 ist es bekannt, das Mikrofon einer Freisprecheinrichtung in einem auf dem Sicherheitsgurt verschiebbaren Mikrofongehäuse unterzubringen, so daß es in eine akustisch günstige Position auf dem Brustbereich des Fahrers gebracht werden kann, so daß er beim Telefonieren die Hände nicht vom Lenkrad nehmen muß. Der restliche Teil der Freisprecheinrichtung kann an irgendeiner geeigneten Stelle im Fahrzeug eingebaut sein und entweder einen eigenen Lautsprecher haben oder an das Autoradio angeschlossen sein.

Der Erfindung liegt die Aufgabe zugrunde, eine komplette Freisprecheinrichtung zu schaffen, die sich auch nachträglich einfach in ein Fahrzeug einbauen läßt und sich zum unmittelbaren Anschluß an ein im Fahrzeug benutztes Mobiltelefon eignet und bei der sowohl das Mikrofon als auch der Lautsprecher für optimale Sprachverständlichkeit positioniert werden können, ohne daß im Normalbetrieb akustische Rückkopplungen zu befürchten wären.

Diese Aufgabe wird durch die im Anspruch 1 angegebenen Merkmale gelöst. Weiterbildungen der Erfindung sind in den Unteransprüchen gekennzeichnet.

Durch die Anbringung sowohl des Mikrofons als auch des Lautsprechers am Sicherheitsgurt ergibt sich die Möglichkeit, den Lautsprecher im Schulterbereich in Ohrnähe zu positionieren, so daß mit relativ geringer Lautsprecherleistung eine gute Verständlichkeit auch bei geräuschvoller Umgebung erreicht wird. Hierzu kann das Lautsprechergehäuse beispielsweise am oberen Umlenkpunkt des Sicherheitsgurtes mit einer geeigneten Befestigungsvorrichtung fixiert werden, so daß sich der Lautsprecher möglichst nahe beim Ohr befindet. Bei einer heutzutage üblichen Höhenverstellungsmöglichkeit der Gurtumlenkung für verschieden große Fahrer wird dann die Position des Lautsprechers gleichermaßen verändert, so daß er auch bei unterschiedlichen Fahrern immer günstig in Ohrnähe bleibt. Für die Halterung des Mikrofongehäuses an der Gurtanlenkung - an der B-Säule eines Kraftfahrzeugs - kann beispielsweise ein ausreichend steifes Stück Kabel oder eine Kabelhülse dienen, über welche die Stromversorgungs-und Signalleitungen zum Lautsprechergehäuse geführt sind. Beim Ausziehen und Einrollen des Gurtes verläuft dieser frei durch eine Führung des Lautsprechergehäuses, das dabei in seinem festgelegten Abstand von der Gurtumlenkung verbleibt.

Das auf dem Gurt verschiebbare Mikrofongehäuse erlaubt die Wahl einer günstigen Mikrofonposition in der Nähe des Mundes, wobei das Mikrofon zweckmäßigerweise an der dem Kopf zugewandten Gehäuseseite vorgesehen ist, um die Schallwellen vom Mund möglichst unmittelbar aufzunehmen. Die Verbindung der Mikrofonschaltung vom Mikrofongehäuse zur Schaltung im Lautsprechergehäuse erfolgt zweckmäßigerweise über eine Infrarotstrecke, bei der eine modulierbare Leuchtdiode an der dem Lautsprechergehäuse zugewandten Seite des Mikrofongehäuses angeordnet ist und im Lautsprechergehäuse ein geeigneter Photosensor der Leuchtdiode zugewandt vorgesehen ist. Auf diese Weise lassen sich die Mikrofonsignale zur Schaltung im Lautsprechergehäuse übertragen.

Zur Speisung der Mikrofonschaltung dient zweckmäßigerweise ein im Mikrofongehäuse enthaltener Akku, der über Ladekontakte vom Lautsprechergehäuse aus aufgeladen werden kann, wenn das Mikrofongehäuse an das mit entsprechenden Gegenkontakten versehene Lautsprechergehäuse herangeschoben wird. Für den nötigen Kontaktdruck sorgt zweckmäßigerweise eine magnetische Kupplung zwischen beiden Gehäusen, die aus einem Magnet in dem einen Gehäuse und einem Anker in dem anderen Gehäuse besteht, so daß die beiden Gehäuse beim Zusammenschieben aneinandergehalten werden.

Zur Fixierung des Mikrofongehäuses in einer günstigen Sprechposition wird zweckmäßigerweise eine Arretiervorrichtung vorgesehen, mit der das Mikrofongehäuse auf dem Gurt so weit fixiert werden kann, daß es sich nicht von selbst verschiebt. Die Arretierung läßt sich lösen, wenn das Mikrofongehäuse an das Lautsprechergehäuse herangeschoben ist, so daß allein die Magnetkräfte der Kupplung den Kontaktdruck der Ladekontakte bestimmen. Um dies automatisch zu erreichen, kann der im Mikrofongehäuse befindliche Teil der Kupplung ähnlich wie der Riegel eines Türschlosses ein- und ausfahrbar sein und so mit dem Arretiermechanismus gekoppelt sein, daß er hineingeschoben wird und die Arretierung freigibt, wenn das Mikrofongehäuse an das Lautsprechergehäuse herangeschoben ist.

Die Erfindung eignet sich insbesondere zur Nachrüstung, wenn in einem Kraftfahrzeug nicht von Haus aus bereits eine Freisprechanlage vorgesehen ist. Es müssen lediglich Mikrofon- und Lautsprechergehäuse am Sicherheitsgurt angebracht werden; der Stromanschluß kann vom Lautsprechergehäuse aus über ein Kabel mit einem Stecker von der Autosteckdose, in der normalerweise der Zigarettenanzünder steckt, erfolgen, während die Signalverbindung mit dem Handy über dessen Head-Set-Buchse hergestellt wird. Es bedarf somit keines nennenswerten Aufwandes, um die erfindungsgemäße Freisprecheinrichtung in einem Kraftfahrzeug nachträglich zu installieren. Für das Handy selbst gibt es preiswerte Universalhalterungen, mit denen es sich griffbereit unterbringen läßt.

Die Erfindung sei nun anhand eines in den beiliegenden Zeichnungen veranschaulichten Ausführungsbeispiels näher erläutert. Es zeigen:
- Fig. 1: eine schematische Ansicht einer auf einem Autositz angegurteten Person mit angelegten Sicherheitsgurt zur Erläuterung der Erfindung;
- Fig. 2: eine schematische Darstellung eines Sicherheitsgurtes in Benutzungsstellung mit der erfindungsgemäßen Freisprecheinrichtung; und
- Fig. 3: eine Detailzeichnung der auf einem Sicherheitsgurt angebrachten Freisprecheinrichtung gemäß der Erfindung.

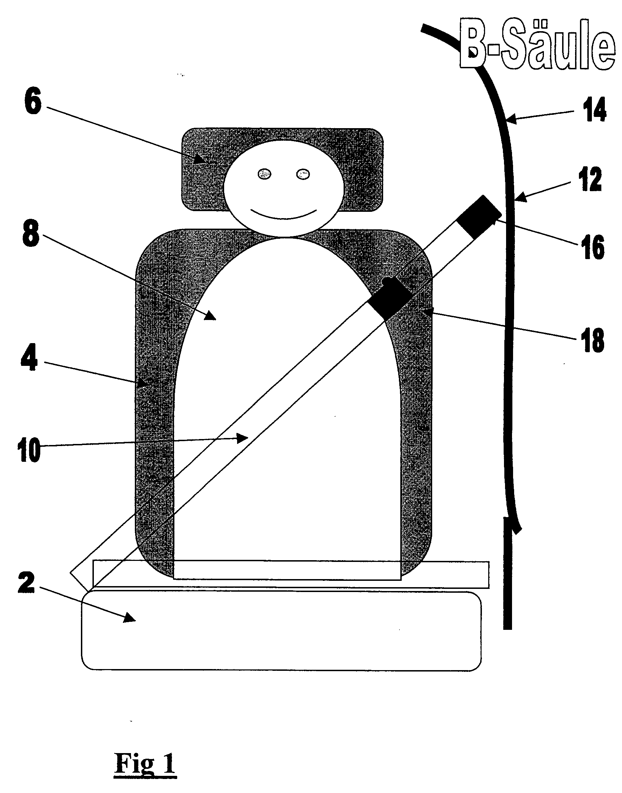

In Fig. 1 erkennt man einen Autositz 2 mit Lehne 4 und Kopfstütze 6 sowie eine angedeutete sitzende Person 8, die einen Sicherheitsgurt 10 angelegt hat. Dieser verläuft wie üblich quer über das Becken und schräg über den Brustkorb bis zu einem Umlenkpunkt 12 an der B-Säule 14 eines Kraftfahrzeugs. In der Nähe des Umlenkpunktes 12 sitzt ein Lautsprechergehäuse 16 der Freisprecheinrichtung, durch welches der Gurt 10 beim Auf- und Abrollen hindurchlaufen kann. Das Lautsprechergehäuse 16 selbst ist in geeigneter Weise am oder in der Nähe des Umlenkpunktes 12 verankert, so daß der in ihm enthaltene Lautsprecher eine günstige Position zum Ohr der Person 8 hat. Ein Mikrofongehäuse 18 sitzt verschiebbar auf dem Gurt 10 und kann in eine zum Mund der Person 8 günstige Position geschoben werden, in welcher es durch einen geeigneten Verriegelungsmechanismus arretiert bleibt. Diese Arretierung braucht nur so fest zu sein, daß sich das Mikrofon nicht von selbst auf dem Gurt verschiebt, während sie ein gewolltes Verschieben durchaus erlaubt.

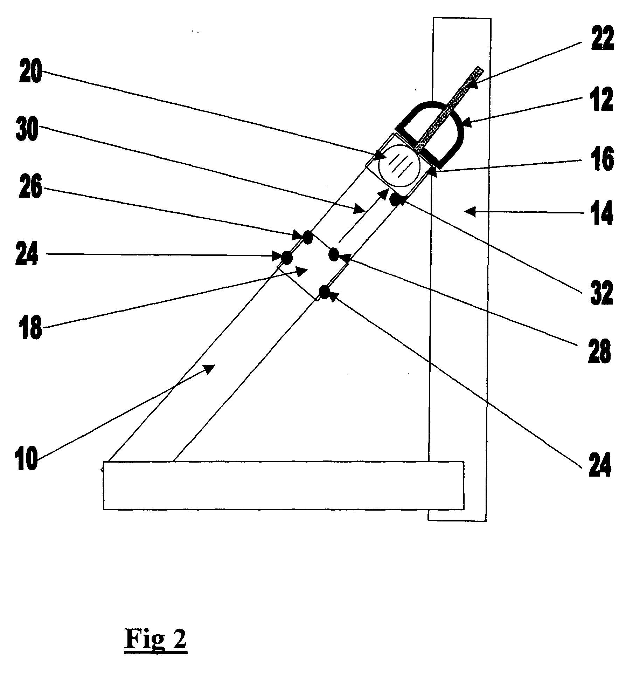

Figur 2 veranschaulicht den Sicherheitsgurt 10 in Anlegestellung ohne Person und Autositz, um das Lautsprechergehäuse 16 und das Mikrofongehäuse 17 am Gurt besser zu zeigen. Im Lautsprechergehäuse 16 befindet sich ein Lautsprecher 20, und das Gehäuse 16 wird im dargestellten Fall von einem relativ steifen Kabelstück 22 in einer solchen Position im Bereich der B-Säule 14 gehalten, daß der Lautsprecher 20 sich möglichst nahe beim Ohr der Person 8 befindet. So können die Schallwellen vom Lautsprecher auf kürzestem Weg zum Ohr gelangen, und man braucht keine große Lautsprecherleistung für eine gute Sprachverständlichkeit. Das Lautsprechergehäuse 16 ist auf seiner Rückseite mit einer Führung für den Gurt 10 ausgebildet, beispielsweise in Form von den Gurt beiderseitig umfassenden Wangen, so daß das Gehäuse einerseits leicht auf dem Gurt aufgesetzt werden kann und andererseits der Gurt beim Auf- und Abrollen ohne Behinderung durch die Gehäuseführung laufen kann.

Eine ähnliche Führung kann auch das Mikrofongehäuse 18 aufweisen, um auch nachträglich leicht auf den Gurt aufgesetzt werden zu können. Außerdem ist ein Klemm- oder Verriegelungsmechanismus vorgesehen, der sich über zwei Tasten 24 betätigen läßt, um das Mikrofongehäuse gegen ungewolltes Verrutschen auf dem Gurt zu sichern. Auf der dem Kopf der Person 8 zugewandten Seite des Mikrofongehäuses 18 befindet sich das Mikrofon 26, so daß es zum Mund der Person gerichtet ist und deren Worte unmittelbar aufnimmt. Bei dieser Anordnung von Mikrofon und Lautsprecher ergibt sich eine äußerst geringe akustische Rückkopplung, so daß keine Pfeifstörungen zu befürchten sind. Falls nötig, kann durch zusätzliche Schaltungsmaßnahmen, wie Filter etc. eine weitere Entkopplung erreicht werden, so daß ein simultaner Zweirichtungsbetrieb ohne weiteres möglich ist.

Die Mikrofonsignale steuern im dargestellten Ausführungsbeispiel eine Leuchtdiode 28, die modulierte Infrarotstrahlen 30 zu einem im Lautsprechergehäuse 16 vorgesehenen Photosensor 32 gelangen läßt, dem ein geeigneter Verstärker nachgeschaltet ist.

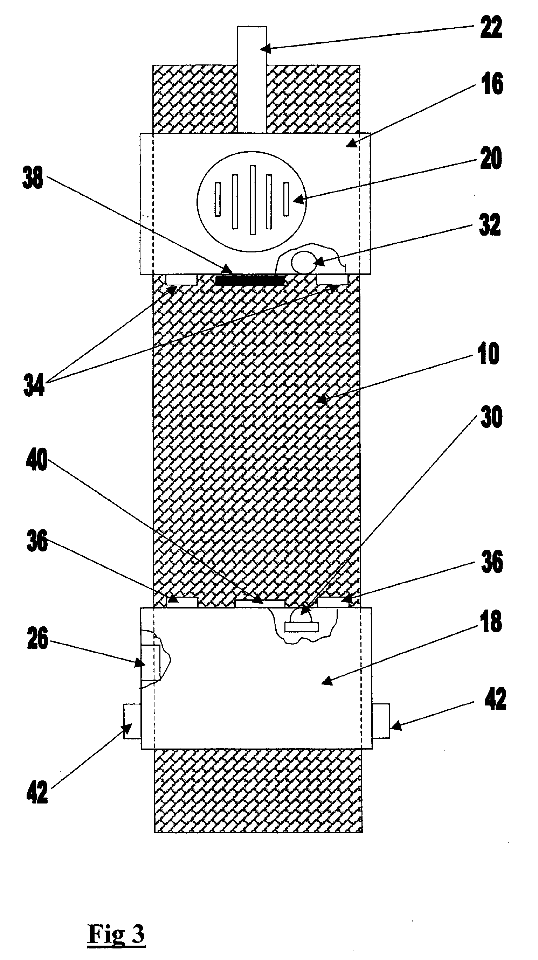

Figur 3 läßt die Anordnung dieser Elemente in den jeweiligen Gehäusen 16 bzw. 18 besser erkennen: Sie sind innerhalb des jeweiligen Gehäuses geschützt untergebracht und hinter entsprechenden schall- bzw. lichtdurchlässigen Blenden bzw. Fenstern angeordnet, die hier nicht im einzelnen dargestellt sind.Die Stromversorgung zum Verstärker im Lautsprechergehäus 16 erfolgt über das Kabel 22. Der Stromversorgung der im Mikrofongehäuse 18 befindlichen Schaltung dient eine aufladbare Batterie, welche im Ruhezustand der Freisprecheinrichtung vom Lautsprechergehäuse 16 aus über Ladekontakte 34, 36 wieder aufgeladen wird. Die Ladekontakte 34 und 36 sind an aufeinander zuweisenden Seiten von Lautsprechergehäuse 16 und Mikrofongehäuse 18 angeordnet, so daß sie bei zusammengeschobenen Gehäuse aneinanderliegen, wobei der gewünschte Kontaktdruck mit Hilfe eines Magneten 38 und eines Ankers 40 erzeugt wird, die im Lautsprechergehäuse 16 und am Mikrofongehäuse 18 bzw. umgekehrt vorgesehen sind.

Bei einer speziellen Ausgestaltung der Erfindung kann der Anker 40 wie der Riegel eines Türschlosses aus dem Mikrofongehäuse 18 herausgeschoben werden, wenn man auf die beiden seitlichen Arretiertasten 42 drückt, mit denen sich das Mikrofongehäuse 18 in einer gewünschten Position auf dem Gurt 10 arretieren läßt, so daß es sich nicht ungewollt verschiebt. Schiebt man bei Nichtbenutzung das Mikrofongehäuse 18 an das Lautsprechergehäuse 16 heran, so legt sich der Anker 40 an den Magnet 38 und wird in das Mikrofongehäuse 18 hineingeschoben, wobei die Arretierung infolge einer mechanischen Kopplung des Ankers 40 mit der Arretiervorrichtung gelöst wird und sich die Kontakte 34 und 36 frei ohne Behinderung durch die Arretierung aneinanderlegen können und der Kontaktdruck durch die Magnetkräfte zwischen Magnet 38 und Anker 40 definiert ist. Der Gurt 10 kann beim Aufrollen frei durch die Führungen der Gehäuse 16 und 18 hindurchlaufen, und bei aufgerolltem Gurt hängt das Mikrofongehäuse 18 magnetisch gehalten am Lautsprechergehäuse 16 an der Seite der B-Säule, und die Batterie im Mikrofongehäuse 18 kann sich aufladen. Legt man den Gurt an, dann zieht man das Mikrofongehäuse 18 nach unten zum Brustbereich und drückt die beiden Arretiertasten 42, um es in der gewünschten Position auf dem Gurt zu fixieren. Diese Fixierung ist wie gesagt nur so stark, daß man das Mikrofon noch gewollt verschieben kann, um die Position zu korrigieren.

## Patentansprüche

1. Freisprecheinrichtung mit einem Mikrofon und einem Lautsprecher, insbesondere für Kraftfahrzeuge oder dgl. mit Sicherheitsgurten, bei welcher das Mikrofon in einem auf dem Gurt verschiebbaren Gehäuse angeordnet ist und sich bei angelegtem Gurt in eine Sprechstellung bringen und arretieren läßt,
**dadurch gekennzeichnet, daß** der Lautsprecher (20) ebenfalls in einem lose auf dem Gurt (10) sitzenden Gehäuse (16) angeordnet ist, das über eine im Bereich der oberen Gurtumlenkung (12) befestigte Halterung derart positioniert wird, daß der Lautsprecher (20) sich bei angelegtem Gurt in Ohrnähe befindet.

2. Freisprecheinrichtung nach Anspruch 1, **gekennzeichnet durch** eine Infrarotverbindung (30) zur Übertragung der Mikrofonsignale vom Mikrofongehäuse (18) zu einer elektrischen Schaltung der Freisprecheinrichtung im Lautsprechergehäuse (16).

3. Freisprecheinrichtung nach Anspruch 1, **dadurch gekennzeichnet, daß** am Mikrofongehäuse (18) und am Lautsprechergehäuse (16) zusammenwirkende Stromversorgungskontakte (34,36) vorgesehen sind, die bei zusammengeschobenen Gehäusen einen Ladestromfluß über das Lautsprechergehäuse (16) zu einem Akku im Mikrofongehäuse (18) erlauben.

4. Freisprecheinrichtung nach Anspruch 1, 2 oder 3, **dadurch gekennzeichnet, daß** das Mikrofongehäuse (18) über eine magnetische Kupplung (38,40) an das Lautsprechergehäuse (16) ansetzbar ist.

5. Freisprecheinrichtung nach Anspruch 4, **dadurch gekennzeichnet, daß** die magnetische Kupplung durch einen Magnet (38) und einen Anker (40) gebildet wird, die an einander zugewandten Seiten der Gehäuse (16,18) angeordnet sind und von denen der am Mikrofongehäuse (18) vorgesehene Teil (40) ein-und ausfahrbar und mit einem über Tasten (42) betätigbaren Arretiermechanismus gekoppelt ist, mit dem das Mikrofongehäuse (18) auf dem Gurt (10) feststellbar bzw. freigebbar ist.

6. Freisprecheinrichtung nach Anspruch 1, **dadurch gekennzeichnet, daß** die Halterung durch ein ausreichend steifes Stück Kabel (22) gebildet wird, über das die elektrischen Komponenten im Lautsprechergehäuse (16) mit der Stromversorgung und der restlichen Schaltung verbunden sind.

7. Freisprecheinrichtung nach einem der vorstehenden Ansprüche, **dadurch gekennzeichnet, daß** die Stromversorgungsleitung mit einem Stecker für eine übliche Autosteckdose (Zigarettenanzünder) und die Signalleitung mit einem zur Head-Set-Buchse eines Mobiltelefons passenden Stecker versehen ist.
